# EUROPÄISCHE PATENTSCHRIFT

(11) **EP 3 205 001 B1**
(45) Veröffentlichungstag und Bekanntmachung des Hinweises auf die Patenterteilung: **14.03.2018**
(21) Anmeldenummer: 15801721.0
(22) Anmeldetag: 20.11.2015
(51) Int. Cl.: H02K 1/18, H02K 1/30

(54) **BAUTEIL FÜR EINE ELEKTRISCHE MASCHINE**
COMPONENT FOR AN ELECTRIC MACHINE
COMPOSANT POUR UNE MACHINE ÉLECTRIQUE

(30) Priorität: 05.12.2014 EP 14196587
(43) Veröffentlichungstag der Anmeldung: 16.08.2017
(73) Patentinhaber: Siemens Aktiengesellschaft, 80333 München (DE)
(72) Erfinder: KÜMMLEE, Horst, 13505 Berlin (DE)
(86) Internationale Anmeldenummer: PCT/EP2015/077202
(87) Internationale Veröffentlichungsnummer: WO 2016/087230

(56) Entgegenhaltungen:
- EP-A1- 0 175 075
- EP-A2- 2 387 132
- DE-B- 1 183 169
- US-A- 3 271 607
- US-A1- 2011 266 913

## Beschreibung

Die Erfindung betrifft ein Bauteil für eine elektrische Maschine, wobei das Bauteil als Rotor ausgestaltet ist, aufweisend eine Welle, ein Aktivteil, welches die Welle in Umfangsrichtung umgibt und welches konzentrisch zur Welle angeordnet ist, und zumindest einen Steg, welcher jeweils mit der Welle verbunden ist und dessen Spitze jeweils von der Welle nach radial außen weist. Weiterhin betrifft die Erfindung ein Bauteil für eine elektrische Maschine, wobei das Bauteil als Stator ausgestaltet ist, aufweisend ein Gehäuse, ein hohlzylinderförmiges Aktivteil, welches innerhalb des Gehäuses angeordnet ist, und zumindest einen Steg, welcher jeweils mit dem Gehäuse verbunden ist und dessen Spitze jeweils von dem Gehäuse nach radial innen weist. Außerdem betrifft die Erfindung eine elektrische Maschine mit einem derartigen Bauteil. Ferner betrifft die Erfindung ein Verfahren zur Montage eines derartigen Bauteils bzw. einer derartigen elektrischen Maschine sowie schließlich ein Serviceverfahren für ein derartiges Bauteil bzw. für eine derartige elektrische Maschine.

Derartige Bauteile bzw. derartige Verfahren kommen beispielsweise bei Elektromotoren oder Generatoren zum Einsatz. Moderne optimierte Blechpakete, insbesondere hochpoliger Maschinen, werden heute immer schlanker, das heißt in der radialen Höhe reduziert, ausgeführt. Damit lässt sich die erforderliche Drehmomentübertragung zwischen dem geblechtem Joch und der Stegwelle bzw. dem Gehäuse nicht mehr über konventionelle Schrumpfverbindungen aufbringen, weil die Bereiche zwischen den Stegen radial einfallen.

Oftmals werden als Alternative aufwändige Formschlussverbindungen, wie z.B. Tangentialverkeilungen eingesetzt. Diese müssen aufwändig eingepasst und gesichert werden. Sie lassen sich nicht über große Längen von mehreren Metern einsetzen.

Ein nachträgliches Demontieren der vorgespannten Teile ist vielfach nur mit großem Aufwand bzw. gar nicht mehr möglich. Aus der EP 2 387 132 A2 sowie der US 2011/0266913 A1 sind Anordnungen zur Befestigung von Aktivteilen von Rotoren bzw. Statoren einer elektrischen Maschine bekannt.

Der Erfindung liegt die Aufgabe zugrunde, eine kostengünstige und zuverlässige Montage von Rotoren bzw. Statoren zu ermöglichen.
Diese Aufgabe wird durch ein als Rotor bzw. Stator ausgestaltetes Bauteil der eingangs genannten Art dadurch gelöst, dass das Bauteil zumindest ein jeweiliges Verbindungselement und zumindest ein jeweiliges Befestigungselement aufweist, wobei das Aktivteil jeweils eine nach radial außen bzw. eine nach radial innen offene Nut zur Aufnahme eines jeweiligen ersten Endes des jeweiligen Verbindungselementes und der jeweiligen Spitze des jeweiligen Steges aufweist, wobei die jeweilige Nut, der jeweilige Steg und das jeweilige Verbindungselement derart ausgestaltet sind, dass durch eine Fixierung des jeweiligen Verbindungselementes im Bereich seines jeweiligen zweiten Endes am jeweiligen Steg mittels des jeweiligen Befestigungselementes eine formschlüssige Verbindung des jeweiligen Steges und des jeweiligen Verbindungselementes mit dem Aktivteil erhältlich ist.
Außerdem wird diese Aufgabe durch eine elektrische Maschine mit einem derartigen Bauteil gelöst.
Ferner wird diese Aufgabe durch ein Verfahren zur Montage eines derartigen Bauteils bzw. einer derartigen elektrischen Maschine durch die folgenden Verfahrensschritte gelöst:
- Bereitstellen der Welle bzw. des Gehäuses und des jeweiligen, mit der Welle bzw. mit dem Gehäuse verbundenen Steges,
- Anordnen der jeweiligen Spitze des jeweiligen Steges in der jeweiligen, offenen Nut des Aktivteils,
- Anordnen des jeweiligen ersten Endes des jeweiligen Verbindungselementes in der jeweiligen Nut des Aktivteils,
- Formschlüssiges Verbinden des jeweiligen Steges und des jeweiligen Verbindungselementes mit dem Aktivteil durch Fixieren des jeweiligen Verbindungselementes im Bereich seines jeweiligen zweiten Endes am jeweiligen Steg mittels des jeweiligen Befestigungselementes.

Schließlich wird diese Aufgabe durch ein Serviceverfahren für ein derartiges Bauteil bzw. für eine derartige elektrische Maschine durch die folgenden Verfahrensschritte gelöst:
- Lösen der formschlüssigen Verbindung des jeweiligen Steges und des jeweiligen Verbindungselementes mit dem Aktivteil durch Lösen der Fixierung des jeweiligen Verbindungselementes im Bereich seines jeweiligen zweiten Endes am jeweiligen Steg mittels des jeweiligen Befestigungselementes,
- Austauschen und/oder Reparieren zumindest eines Teils des Aktivteils,
- Durchführen des Verfahrens zur Montage eines derartigen Bauteils mit einem Aktivteil, welches das ausgetauschte Aktivteil ersetzt, und/oder dem reparierten Aktivteil.

Die vorgeschlagene Lösung ermöglicht es, Rotoren bzw. Statoren für elektrische Maschinen zuverlässig und auf kostengünstige Art und Weise herzustellen. Hierzu ist ein jeweiliger Steg vorgesehen, welcher bei Rotoren mit der Welle und bei Statoren mit dem Gehäuse verbunden ist. Unter einem Gehäuse wird dabei recht allgemein eine Tragestruktur verstanden, mit welchem das Aktivteil zur Übertragung der während des Betriebs der elektrischen Maschine auftretenden Drehmomente verbunden ist. Die Spitze des jeweiligen Steges wird zusammen mit dem jeweiligen Verbindungselement über eine formschlüssige Verbindung mit dem Aktivteil verbunden. Somit kann für den Rotor bzw. den Stator eine zuverlässige Verbindung des Aktivteils mit der Welle bzw. dem Gehäuse realisiert werden.

Die formschlüssige Verbindung wird dadurch erreicht, dass das Aktivteil eine jeweilige Nut aufweist, welche in Richtung der Welle bzw. des Gehäuses offen ist. Dabei sind die jeweilige Nut, die jeweilige Spitze des jeweiligen Steges sowie das jeweilige erste Ende des jeweiligen Verbindungselementes derart ausgestaltet, dass die jeweilige Spitze und das jeweilige Verbindungselement in die jeweilige Nut eingeführt werden können. Dabei ist vorgesehen, dass das jeweilige Verbindungselement im Bereich seines jeweiligen zweiten Endes am jeweiligen Steg mittels des Befestigungselementes fixiert wird, um so schließlich die formschlüssige Verbindung des jeweiligen Steges und des jeweiligen Verbindungselementes mit dem Aktivteil zu erhalten.

Der vorgeschlagene Rotor bzw. Stator sowie die vorgeschlagenen Verfahren ermöglichen somit vergleichsweise filigrane Joche, deren radiale Höhe vergleichsweise gering ist. Die formschlüssige Verbindung stellt dabei auch eine zuverlässige Übertragung von wechselnden Drehmomenten sicher.

Von besonderem Vorteil ist bei der vorgeschlagenen Lösung, dass die Joche bei einem Rotor nicht mehr zum Aufschrumpfen auf die Welle erwärmt werden müssen. Bei einem Stator ergibt sich als Vorteil bei der vorgeschlagenen Lösung, dass das Gehäuse nicht mehr zum Aufschrumpfen auf das Aktivteil erwärmt werden muss. Insbesondere wenn das Aktivteil des Stators ein Blechpaket aufweist, kann so das aufwändige Verschweißen des Gehäuses bzw. einer Rückenprofile aufweisenden Tragestruktur mit dem Blechpaket eingespart werden.

Insbesondere wird dadurch der Einsatz von thermisch sensiblen Materialien oder Bauteilen bei dem jeweiligen Aktivteil ermöglicht. Insbesondere bei Rotoren können somit thermisch sensible Permanentmagnetsysteme verwendet werden.

Beispielsweise lassen sich bei Walzantrieben so auf einfache Weise die heute verwendeten, aufwändigen Formschluss- bzw. Verkeilungssysteme ersetzen.

Bei einer vorteilhaften Ausgestaltung der Erfindung ist die Fixierung des jeweiligen Verbindungselementes am jeweiligen Steg mittels des jeweiligen Befestigungselementes als mechanisch lösbare Verbindung ausgestaltet.

Die mechanisch lösbare Verbindung des jeweiligen Verbindungselementes mit dem jeweiligen Steg erleichtert einen Austausch bzw. eine Reparatur zumindest eines Teils des Aktivteils. Denn dank einer derartigen Verbindung kann die Fixierung bei einem montierten Bauteil vergleichsweise leicht und bequem gelöst werden, wodurch das Aktivteil besonders leicht zugänglich und gegebenenfalls von der Welle bzw. vom Gehäuse demontierbar ist. Insbesondere wird durch die mechanisch lösbare Verbindung das oben erläuterte Serviceverfahren vereinfacht.

Bei einer weiteren vorteilhaften Ausgestaltung der Erfindung ist das jeweilige Befestigungselement dabei als Niete oder Schraube, insbesondere für eine Klemmverschraubung, ausgestaltet.

Beispielsweise weist das jeweilige Verbindungselement eine entsprechende, durchgehende Bohrung zur Hindurchführung des jeweiligen Befestigungselementes auf, wobei vorzugsweise auch der jeweilige Steg über eine entsprechende Bohrung zur Aufnahme des jeweiligen Befestigungselementes verfügt. Beispielsweise kann die Bohrung des jeweiligen Stegs als Sackloch oder durchgehende Bohrung ausgeführt sein. Ist das jeweilige Befestigungselement als Schraube, insbesondere für eine Klemmverschraubung, ausgeführt, weist die Bohrung des jeweiligen Steges vorzugsweise ein entsprechendes Innengewinde auf.

Bei einer weiteren vorteilhaften Ausgestaltung der Erfindung verbreitert sich die jeweilige Nut zumindest abschnittsweise zu ihrem jeweiligen Nutgrund in Umfangsrichtung.

Der jeweilige Nutgrund befindet sich bei dem als Rotor bzw. Stator ausgestalteten Bauteil am radial äußeren bzw. inneren Ende der jeweiligen Nut. Die zumindest abschnittsweise Verbreiterung der jeweiligen Nut ist der Gestalt, dass die Breite in Umfangsrichtung der jeweiligen Nut von der jeweiligen Öffnung der Nut zum jeweiligen Nutgrund hin zumindest abschnittsweise zunimmt. Vom jeweiligen Nutgrund zur jeweiligen Öffnung der Nut ist die Nut somit zumindest abschnittsweise keilförmig ausgestaltet.

Diese Ausgestaltung der jeweiligen Nut erlaubt eine sichere und zuverlässige Verbindung des jeweiligen Steges, des jeweiligen Verbindungselementes und des Aktivteils. Dies wird beispielsweise dadurch erreicht, dass in die erläuterte, zumindest abschnittsweise keilförmig ausgestaltete jeweilige Nut ein jeweiliger Steg und ein jeweiliges Verbindungselement eingeführt werden bzw. sind, welche zusammen zum jeweiligen zweiten Ende hin eine zunehmende Breite in Umfangsrichtung aufweisen. Somit wird eine formschlüssige Verbindung des jeweiligen Steges und des jeweiligen Verbindungselementes mit dem Aktivteil erreicht.

Bei einer weiteren vorteilhaften Ausgestaltung der Erfindung ist die Nut dabei zumindest abschnittsweise schwalbenschwanzförmig ausgestaltet.

Der jeweilige Steg und das jeweilige Verbindungselement werden entsprechend derart ausgestaltet, dass sie zusammen in die jeweilige, schwalbenschwanzförmige Nut eingreifen, so dass eine besonders zuverlässige Verbindung des jeweiligen Steges, des jeweiligen Verbindungselementes und des Aktivteils erhältlich ist.

Bei einer weiteren vorteilhaften Ausgestaltung der Erfindung verbreitert sich der jeweilige Steg dabei zumindest im Bereich jener Seitenfläche, welche einer ersten Seitenfläche der jeweiligen Nut zugeordnet ist, zu seiner Spitze hin in Umfangsrichtung.

Die genannte Seitenfläche des jeweiligen Steges ist dabei im montierten Zustand zumindest abschnittsweise in Kontakt mit der ersten Seitenfläche der jeweiligen Nut. Vorzugsweise verbreitert sich der jeweilige Steg zumindest an der genannten Seitenfläche entsprechend der Ausgestaltung der jeweiligen Nut, so dass der jeweilige Steg im montierten Zustand großflächig in Kontakt mit der ersten Seitenfläche ist. Vorteilhafterweise ist der jeweilige Steg derart ausgestaltet, dass er mit dem jeweiligen Nutgrund im montierten Zustand in Kontakt ist, wobei er vorzugsweise großflächig auf dem Nutgrund aufliegt. Insbesondere kann der jeweilige Steg somit zumindest im Bereich der genannten Seitenfläche im Wesentlichen schwalbenschwanzförmig ausgestaltet sein.

Bei einer weiteren vorteilhaften Ausgestaltung der Erfindung verbreitert sich das jeweilige Verbindungselement dabei zumindest im Bereich jener Seitenfläche, welche einer zweiten Seitenfläche der jeweiligen Nut zugeordnet ist, zu seinem jeweiligen ersten Ende hin in Umfangsrichtung.

Die genannte Seitenfläche des jeweiligen Verbindungselements ist dabei im montierten Zustand zumindest abschnittsweise in Kontakt mit der zweiten Seitenfläche der jeweiligen Nut. Vorzugsweise verbreitert sich das jeweilige Verbindungselement zumindest an der genannten Seitenfläche entsprechend der Ausgestaltung der jeweiligen Nut, so dass das jeweilige Verbindungselement im montierten Zustand großflächig in Kontakt mit der zweiten Seitenfläche ist. Vorteilhafterweise ist das jeweilige Verbindungselement derart ausgestaltet, dass es mit dem jeweiligen Nutgrund im montierten Zustand in Kontakt ist, wobei es vorzugsweise großflächig auf dem Nutgrund aufliegt. Insbesondere kann das jeweilige Verbindungselement somit zumindest im Bereich der genannten Seitenfläche im Wesentlichen schwalbenschwanzförmig ausgestaltet sein.

Bei einer weiteren vorteilhaften Ausgestaltung der Erfindung weist das jeweilige Verbindungselement zwischen seinen beiden Enden an seiner, dem jeweiligen Steg zugewandten Seite einen Drehpunkt, insbesondere einen Vorsprung, auf, welcher im montierten Zustand des jeweiligen Verbindungselementes auf dem jeweiligen Steg aufliegt, wobei das jeweilige Verbindungselement einen kürzeren, ersten Hebelarm und einen längeren, zweiten Hebelarm aufweist, wobei der erste Hebelarm die wirksame Länge zwischen dem Drehpunkt und zumindest einem ersten Kontaktpunkt ist, an welchem das jeweilige Verbindungselement in der Nut auf dem Aktivteil aufliegt, wobei der zweite Hebelarm die wirksame Länge zwischen dem Drehpunkt und zumindest einem zweiten Kontaktpunkt ist, an welchem das jeweilige Verbindungselement im Bereich seines jeweiligen zweiten Endes am jeweiligen Steg mittels des jeweiligen Befestigungselementes fixiert ist.

Weist das jeweilige Verbindungselement einen Vorsprung auf, so fungiert dieser als Drehpunkt. Alternativ ist auch denkbar, dass das jeweilige Verbindungselement keinen separaten Vorsprung aufweist und der jeweilige Steg eine entsprechende Erhebung aufweist, über welche das jeweilige Verbindungselement um den Drehpunkt herum drehbar ist. Dabei unterteilt der Drehpunkt das jeweilige Verbindungselement in einen kürzeren, ersten Hebelarm und einen längeren, zweiten Hebelarm. Der erste Kontaktpunkt, welcher zusammen mit der Position des Drehpunkts den ersten Hebelarm bestimmt, ist dabei ein Punkt des jeweiligen Verbindungselementes, an welchem das jeweilige Verbindungselement auf dem Nutgrund oder auf der zweiten Seite der jeweiligen Nut aufliegt.

Eine derartige Ausgestaltung des jeweiligen Verbindungselementes erlaubt die erforderlichen Vorspannkräfte für eine zuverlässige Verbindung des jeweiligen Steges und des jeweiligen Verbindungselementes mit dem Aktivteil nach dem Kniehebelprinzip mit vergleichsweise einfachen und kleinen Befestigungselementen zu erreichen. Deshalb kann schon eine vergleichsweise geringe Vorspannkraft für das jeweilige Befestigungselement genügen, um dennoch eine ausreichend große Vorspannkraft für die genannte Verbindung zu erreichen. Insbesondere kann das Kniehebelprinzip also dazu verwendet werden, die erforderlichen Vorspannkräfte auf relativ kleine Schraubverbindungen zurückzuführen.

Insbesondere lassen sich dadurch relative filigrane Joche elektrischer Maschinen erreichen, wobei dennoch zuverlässig auch wechselnde Drehmomentes übertragbar sind.

Durch entsprechende Wahl der Hebelverhältnisse lassen sich nahezu beliebige Verspannungskräfte aufbringen. Vorzugsweise ist das Verhältnis der Länge des zweiten Hebelarms zur Länge des ersten Hebelarms zumindest 2:1, vorzugsweise zumindest 3:1 oder größer.

Bei einer weiteren vorteilhaften Ausgestaltung der Erfindung beträgt das Verhältnis der Länge des zweiten Hebelarms zur Länge des ersten Hebelarms dabei zumindest 5:1 oder 10:1.

Insbesondere bei größeren Maschinen mit einem Rotordurchmesser bzw. einem Statorinnendurchmesser von zumindest 500 mm ermöglicht ein derartiges Verhältnis der jeweiligen Länge der beiden Hebelarme eine sichere Verbindung des jeweiligen Steges und des jeweiligen Verbindungselementes mit dem Aktivteil. Dennoch kann gleichzeitig ein vergleichsweise einfaches jeweiliges Befestigungselement verwendet werden und/oder eine vergleichsweise kleine Vorspannkraft in Anschlag gebracht werden.

Bei einer weiteren vorteilhaften Ausgestaltung der Erfindung ist das Bauteil derart ausgestaltet, dass der jeweilige Steg in Bezug auf das Aktivteil in radialer Richtung und/oder in Umfangsrichtung zentrierbar, insbesondere spielfrei zentrierbar, ist.

Durch eine derartige Ausgestaltung des Bauteils, insbesondere des jeweiligen Verbindungselementes, können eine besonders zuverlässige Montage des Rotors bzw. des Stators und insbesondere eine besonders belastbare Verbindung des jeweiligen Steges und des jeweiligen Verbindungselementes mit dem Aktivteil erreicht werden. Beispielsweise kann auch der jeweilige Nutgrund derart ausgestaltet sein, dass eine radiale Zentrierung des jeweiligen Steges und gegebenenfalls des jeweiligen Verbindungselementes in Bezug auf das Aktivteil erreichbar ist.

Insbesondere ist ein derartiges Bauteil besonders wenig anfällig bei wechselnden Drehmomenten und Vibrationen. Somit lassen sich relative filigrane Joche elektrischer Maschinen spielfrei zentrieren und auch wechselnde Drehmomente tangential spielfrei übertragen.

Bei einer weiteren vorteilhaften Ausgestaltung der Erfindung ist zwischen dem jeweiligen Steg und dem jeweiligen Verbindungselement im Bereich des zweiten Kontaktpunktes, an welchem das jeweilige Verbindungselement im Bereich seines jeweiligen zweiten Endes am jeweiligen Steg mittels des jeweiligen Befestigungselementes fixiert ist, zumindest ein Justierungselement angeordnet.

Das jeweilige Justierungselement kann beispielsweise als ein Ausgleichsblech ausgestaltet sein. Über die Dicke bzw. die Anzahl der jeweiligen Justierungselemente kann somit eine Justierung erreicht werden. Das zumindest eine Justierungselement kann insbesondere einem Toleranzausgleich dienen.

Beispielsweise ist das Aktivteil mit Permanentmagneten bestückt und/oder geblecht ausgeführt.

Die vorgeschlagenen Bauteile bzw. elektrischen Maschinen sind vorzugsweise mit einer elektrischen Leistung von zumindest 1 MW, insbesondere von zumindest 10 MW, betreibbar. Vorzugsweise beträgt der Rotordurchmesser bzw. der Statorinnendurchmesser zumindest 500 mm, insbesondere zumindest 2000 mm. Vorzugsweise wird das vorgeschlagene Bauteil und/oder die vorgeschlagene elektrische Maschine bei einem Gondelantrieb bzw. POD-Antrieb zum Antrieb eines Schiffes eingesetzt.

Im Folgenden wird die Erfindung anhand der in den Figuren dargestellten Ausführungsbeispiele näher beschrieben und erläutert. Es zeigen:
- FIG 1: ein erstes Ausführungsbeispiel des erfindungsgemäßen Bauteils, und
- FIG 2: ein zweites Ausführungsbeispiel des erfindungsgemäßen Bauteils.

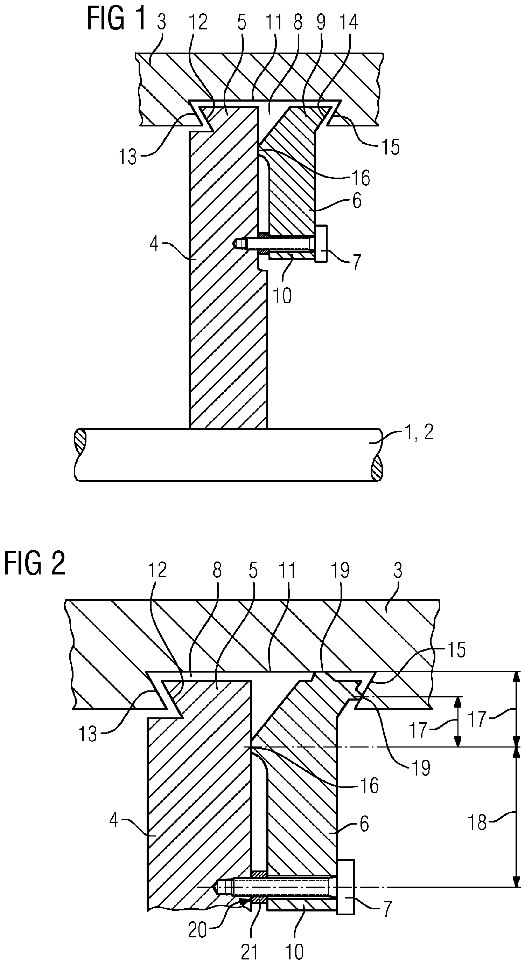

Figur 1 zeigt ein erstes Ausführungsbeispiel des erfindungsgemäßen Bauteils, wobei lediglich ein Ausschnitt dargestellt ist. Das vorgeschlagene Bauteil kann dabei als Rotor oder als Stator ausgestaltet sein.

Bei einer Ausgestaltung des Bauteils als Rotor ist vorgesehen, dass das Bauteil eine Welle 1, ein Aktivteil 3, welches die Welle 1 in Umfangsrichtung umgibt und welches konzentrisch zur Welle 1 angeordnet ist, und einen Steg 4 aufweist, welcher mit der Welle 1 verbunden ist und dessen Spitze 5 von der Welle 1 nach radial außen weist. Bei einer Ausgestaltung des Bauteils als Stator ist vorgesehen, dass das Bauteil ein Gehäuse 2, ein hohlzylinderförmiges Aktivteil 3, welches innerhalb des Gehäuses 2 angeordnet ist, und einen Steg 4 aufweist, welcher mit dem Gehäuse 2 verbunden ist und dessen Spitze 5 von dem Gehäuse 2 nach radial innen weist.

Weiterhin weist das Bauteil ein Verbindungselement 6 und ein Befestigungselement 7 auf, wobei das Aktivteil 3 eine offene Nut 8 zur Aufnahme eines ersten Endes 9 des Verbindungselements 6 und der Spitze 5 des Steges 4 aufweist. Bei der Ausgestaltung als Rotor bzw. als Stator ist die Nut 8 dabei nach radial innen bzw. nach radial außen offen ausgeführt. Die Nut 8, der Steg 4 und das Verbindungselement 6 sind dabei derart ausgestaltet, dass durch eine Fixierung des Verbindungselementes 6 im Bereich seines zweiten Endes 10 am Steg 4 mittels des Befestigungselementes 7 eine formschlüssige Verbindung des Steges 4 und des Verbindungselementes 6 mit dem Aktivteil 3 erhältlich ist.

Vorzugsweise ist die Fixierung des Verbindungselementes 6 am Steg 4 mittels des Befestigungselementes 7 als mechanisch lösbare Verbindung ausgestaltet. Insbesondere kann ein Befestigungselement 7 in Form einer Niete oder einer Schraube, insbesondere für eine Klemmverschraubung, zum Einsatz kommen.

Vorteilhafterweise verbreitert sich die Nut 8 in Umfangsrichtung zum jeweiligen Nutgrund 11 hin, wie in Figur 1 angedeutet. Insbesondere kann die jeweilige Nut 8 zumindest abschnittsweise schwalbenschwanzförmig ausgestaltet sein. Beispielsweise verbreitert sich der Steg 4 in Umfangsrichtung im Bereich jener Seitenfläche 12, welche einer ersten Seitenfläche 13 der Nut 8 zugeordnet ist, wobei sich alternativ oder zusätzlich das Verbindungselement 6 in Umfangsrichtung im Bereich jener Seitenfläche 14 verbreitert, welche einer zweiten Seitenfläche 15 der Nut 8 zugeordnet ist.

Das Verbindungselement 6 weist zwischen seinen beiden Enden 9, 10 an seiner, dem Steg 4 zugewandten Seite einen Drehpunkt 16 auf, welcher beispielsweise wie in Figur 1 angedeutet, als Vorsprung ausgebildet sein kann. Alternativ ist auch denkbar, dass das Verbindungselement 6 keinen separaten Vorsprung aufweist und der Steg 4 eine entsprechende Erhebung aufweist, über welche das Verbindungselement 6 um den Drehpunkt 16 drehbar ist. Weitere Aspekte des Drehpunkts 16 werden im Zusammenhang mit dem zweiten Ausführungsbeispiel näher erläutert.

Figur 2 zeigt ausschnittsweise ein zweites Ausführungsbeispiel des erfindungsgemäßen Bauteils. Gleiche Bezugszeichen wie in Figur 1 bezeichnen dabei gleiche Gegenstände.

Das Verbindungselement 6 liegt in der Nut 8 bei einem ersten Kontaktpunkt 19 auf dem Aktivteil 3 auf, wobei wie in Figur 2 angedeutet, auch zwei erste Kontaktpunkte 19 vorhanden sein können. So kann einer der ersten Kontaktpunkte 19 am Nutgrund 11 und ein zweiter der ersten Kontaktpunkte 19 an der zweiten Seitenfläche 15 der Nut 8 angeordnet sein. Durch eine derartige Ausgestaltung des ersten Kontaktpunktes 19 kann eine besonders gute Zentrierung, insbesondere sowohl in radialer Richtung als auch in Umfangsrichtung, erreicht werden, welche beispielsweise spielfrei ausgeführt werden kann. Entsprechend den beiden ersten Kontaktpunkten 19 kann ein erster Hebelarm 17, welcher der wirksamen Länge zwischen dem Drehpunkt 16 und dem jeweiligen ersten Kontaktpunkt 19 entspricht, kürzer oder länger sein, je nachdem, welcher der ersten beiden Kontaktpunkte 19 maßgeblich ist.

Weiterhin weist das Verbindungselement 6 einen zweiten Hebelarm 18 auf, welcher länger als der erste Hebelarm 17 ist, wobei der zweite Hebelarm 18 der wirksamen Länge zwischen dem Drehpunkt 16 und einem zweiten Kontaktpunkt 20 ist. Bei dem zweiten Kontaktpunkt 20 ist das Verbindungselement 6 im Bereich seines weiten Endes 10 am Steg 4 mittels des Befestigungselementes 7 fixiert.

Insbesondere kann das Verhältnis der Länge des zweiten Hebelarms 18 zur Länge des ersten Hebelarms 17 zumindest 2:1 oder 3:1 betragen. Vorteilhafterweise beträgt dieses Verhältnis jedoch zumindest 5:1 oder 10:1.

Ferner ist ein Justierungselement 21 vorgesehen, welches zwischen dem Verbindungselement 6 und dem Steg 4 im Bereich des zweiten Kontaktpunktes 20 angeordnet ist, an welchem das Verbindungselement 6 im Bereich seines zweiten Endes 10 am Steg 4 mittels des Befestigungselementes 7 fixiert ist. Mittels des Justierungselementes 21 kann eine besonders zuverlässige Zentrierung, insbesondere spielfreie Zentrierung, erreicht werden.

Wie schon im Zusammenhang mit dem ersten Ausführungsbeispiel erläutert, kann das Verbindungselement 6 einen als Vorsprung ausgeführten Drehpunkt 16 aufweisen. Alternativ ist auch denkbar, dass das Verbindungselement 6 keinen separaten Vorsprung aufweist und der Steg 4 eine entsprechende Erhebung aufweist, über welche das Verbindungselement 6 um den Drehpunkt 16 drehbar ist.

Zusammenfassend betrifft die Erfindung ein Bauteil für eine elektrische Maschine, wobei das Bauteil als Rotor ausgestaltet ist, aufweisend eine Welle, ein Aktivteil, welches die Welle in Umfangsrichtung umgibt und welches konzentrisch zur Welle angeordnet ist, und zumindest einen Steg, welcher jeweils mit der Welle verbunden ist und dessen Spitze jeweils von der Welle nach radial außen weist. Weiterhin betrifft die Erfindung ein Bauteil für eine elektrische Maschine, wobei das Bauteil als Stator ausgestaltet ist, aufweisend ein Gehäuse, ein hohlzylinderförmiges Aktivteil, welches innerhalb des Gehäuses angeordnet ist, und zumindest einen Steg, welcher jeweils mit dem Gehäuse verbunden ist und dessen Spitze jeweils von dem Gehäuse nach radial innen weist. Außerdem betrifft die Erfindung eine elektrische Maschine mit einem derartigen Bauteil. Ferner betrifft die Erfindung ein Verfahren zur Montage eines derartigen Bauteils bzw. einer derartigen elektrischen Maschine sowie schließlich ein Serviceverfahren für ein derartiges Bauteil bzw. eine derartige elektrische Maschine.

Um eine kostengünstige und zuverlässige Montage von Rotoren bzw. Statoren zu ermöglichen, wird vorgeschlagen, dass das Bauteil zumindest ein jeweiliges Verbindungselement und zumindest ein jeweiliges Befestigungselement aufweist, wobei das Aktivteil jeweils eine nach radial innen bzw. nach radial außen offene Nut zur Aufnahme eines jeweiligen ersten Endes des jeweiligen Verbindungselementes und der jeweiligen Spitze des jeweiligen Steges aufweist, wobei die jeweilige Nut, der jeweilige Steg und das jeweilige Verbindungselement derart ausgestaltet sind, dass durch eine Fixierung des jeweiligen Verbindungselementes im Bereich seines jeweiligen zweiten Endes am jeweiligen Steg mittels des jeweiligen Befestigungselementes eine formschlüssige Verbindung des jeweiligen Steges und des jeweiligen Verbindungselementes mit dem Aktivteil erhältlich ist. Außerdem wird eine elektrische Maschine mit einem derartigen Bauteil vorgeschlagen.

Ferner wird ein Verfahren zur Montage eines derartigen Bauteils bzw. einer derartigen elektrischen Maschine mit den folgenden Verfahrensschritten vorgeschlagen:
- Bereitstellen der Welle bzw. des Gehäuses und des jeweiligen, mit der Welle bzw. mit dem Gehäuse verbundenen Steges,
- Anordnen der jeweiligen Spitze des jeweiligen Steges in der jeweiligen, offenen Nut des Aktivteils,
- Anordnen des jeweiligen ersten Endes des jeweiligen Verbindungselementes in der jeweiligen Nut des Aktivteils,
- Formschlüssiges Verbinden des jeweiligen Steges und des jeweiligen Verbindungselementes mit dem Aktivteil durch Fixieren des jeweiligen Verbindungselementes im Bereich seines jeweiligen zweiten Endes am jeweiligen Steg mittels des jeweiligen Befestigungselementes.

Schließlich wird ein Serviceverfahren für ein derartiges Bauteil bzw. eine derartige elektrische Maschine mit den folgenden Verfahrensschritten vorgeschlagen:
- Lösen der formschlüssigen Verbindung des jeweiligen Steges und des jeweiligen Verbindungselementes mit dem Aktivteil durch Lösen der Fixierung des jeweiligen Verbindungselementes im Bereich seines jeweiligen zweiten Endes am jeweiligen Steg mittels des jeweiligen Befestigungselementes,
- Austauschen und/oder Reparieren zumindest eines Teils des Aktivteils,
- Durchführen des Verfahrens zur Montage eines derartigen Bauteils mit dem ausgetauschten und/oder reparierten Aktivteil.

## Patentansprüche

1. Bauteil für eine elektrische Maschine, wobei das Bauteil als Rotor ausgestaltet ist, aufweisend
- eine Welle (1),
- ein Aktivteil (3), welches die Welle (1) in Umfangsrichtung umgibt und welches konzentrisch zur Welle (1) angeordnet ist, und
- zumindest einen Steg (4), welcher jeweils mit der Welle (1) verbunden ist und dessen Spitze (5) jeweils von der Welle (1) nach radial außen weist, wobei das Bauteil zumindest ein jeweiliges Verbindungselement (6) und zumindest ein jeweiliges Befestigungselement (7) aufweist, **dadurch gekennzeichnet, dass** das Aktivteil (3) jeweils eine nach radial innen offene Nut (8) zur Aufnahme eines jeweiligen ersten Endes (9) des jeweiligen Verbindungselementes (6) und der jeweiligen Spitze (5) des jeweiligen Steges (4) aufweist,
wobei die jeweilige Nut (8), der jeweilige Steg (4) und das jeweilige Verbindungselement (6) derart ausgestaltet sind, dass durch eine Fixierung des jeweiligen Verbindungselementes (6) im Bereich seines jeweiligen zweiten Endes (10) am jeweiligen Steg (4) mittels des jeweiligen Befestigungselementes (7) eine formschlüssige Verbindung des jeweiligen Steges (4) und des jeweiligen Verbindungselementes (6) mit dem Aktivteil (3) erhältlich ist.

2. Bauteil für eine elektrische Maschine, wobei das Bauteil als Stator ausgestaltet ist, aufweisend
- ein Gehäuse (2),
- ein hohlzylinderförmiges Aktivteil (3), welches innerhalb des Gehäuses (2) angeordnet ist, und
- zumindest einen Steg (4), welcher jeweils mit dem Gehäuse (2) verbunden ist und dessen Spitze (5) jeweils von dem Gehäuse (2) nach radial innen weist, wobei das Bauteil zumindest ein jeweiliges Verbindungselement (6) und zumindest ein jeweiliges Befestigungselement (7) aufweist, **dadurch gekennzeichnet, dass** das Aktivteil (3) jeweils eine nach radial außen offene Nut (8) zur Aufnahme eines jeweiligen ersten Endes (9) des jeweiligen Verbindungselementes (6) und der jeweiligen Spitze (5) des jeweiligen Steges (4) aufweist,
wobei die jeweilige Nut (8), der jeweilige Steg (4) und das jeweilige Verbindungselement (6) derart ausgestaltet sind, dass durch eine Fixierung des jeweiligen Verbindungselementes (6) im Bereich seines jeweiligen zweiten Endes (10) am jeweiligen Steg (4) mittels des jeweiligen Befestigungselementes (7) eine formschlüssige Verbindung des jeweiligen Steges (4) und des jeweiligen Verbindungselementes (6) mit dem Aktivteil (3) erhältlich ist.

3. Bauteil nach einem der vorhergehenden Ansprüche,
wobei die Fixierung des jeweiligen Verbindungselementes (6) am jeweiligen Steg (4) mittels des jeweiligen Befestigungselementes (7) als mechanisch lösbare Verbindung ausgestaltet ist.

4. Bauteil nach Anspruch 3,
wobei das jeweilige Befestigungselement (7) als Niete oder Schraube, insbesondere für eine Klemmverschraubung, ausgestaltet ist.

5. Bauteil nach einem der vorhergehenden Ansprüche,
wobei sich die jeweilige Nut (8) zumindest abschnittsweise zu ihrem jeweiligen Nutgrund (11) in Umfangsrichtung verbreitert.

6. Bauteil nach Anspruch 5,
wobei die Nut (8) zumindest abschnittsweise schwalbenschwanzförmig ausgestaltet ist.

7. Bauteil nach Anspruch 5 oder 6,
wobei sich der jeweilige Steg (4) zumindest im Bereich jener Seitenfläche (12), welche einer ersten Seitenfläche (13) der jeweiligen Nut (8) zugeordnet ist, zu seiner Spitze (5) hin in Umfangsrichtung verbreitert.

8. Bauteil nach einem der Ansprüche 5-7,
wobei sich das jeweilige Verbindungselement (6) zumindest im Bereich jener Seitenfläche (14), welche einer zweiten Seitenfläche (15) der jeweiligen Nut (8) zugeordnet ist, zu seinem jeweiligen ersten Ende (9) hin in Umfangsrichtung verbreitert.

9. Bauteil nach einem der vorhergehenden Ansprüche,
wobei das jeweilige Verbindungselement (6) zwischen seinen beiden Enden (9, 10) an seiner, dem jeweiligen Steg (8) zugewandten Seite einen Drehpunkt (16), insbesondere einen Vorsprung, aufweist, welcher im montierten Zustand des jeweiligen Verbindungselementes (6) auf dem jeweiligen Steg (4) aufliegt,
wobei das jeweilige Verbindungselement (6) einen kürzeren, ersten Hebelarm (17) und einen längeren, zweiten Hebelarm (18) aufweist,
wobei der erste Hebelarm (17) die wirksame Länge zwischen dem Drehpunkt (16) und zumindest einem ersten Kontaktpunkt (19) ist, an welchem das jeweilige Verbindungselement (6) in der Nut (8) auf dem Aktivteil (3) aufliegt,
wobei der zweite Hebelarm (18) die wirksame Länge zwischen dem Drehpunkt (16) und zumindest einem zweiten Kontaktpunkt (20) ist, an welchem das jeweilige Verbindungselement (6) im Bereich seines jeweiligen zweiten Endes (10) am jeweiligen Steg (4) mittels des jeweiligen Befestigungselementes (7) fixiert ist.

10. Bauteil nach Anspruch 9,
wobei das Verhältnis der Länge des zweiten Hebelarms (18) zur Länge des ersten Hebelarms (17) zumindest 5:1 oder 10:1 beträgt.

11. Bauteil nach einem der vorhergehenden Ansprüche,
wobei das Bauteil derart ausgestaltet ist, dass der jeweilige Steg (4) in Bezug auf das Aktivteil (3) in radialer Richtung und/oder in Umfangsrichtung zentrierbar, insbesondere spielfrei zentrierbar, ist.

12. Bauteil nach Anspruch 11,
wobei zwischen dem jeweiligen Steg (4) und dem jeweiligen Verbindungselement (6) im Bereich des zweiten Kontaktpunktes (20), an welchem das jeweilige Verbindungselement (6) im Bereich seines jeweiligen zweiten Endes (10) am jeweiligen Steg (4) mittels des jeweiligen Befestigungselementes (7) fixiert ist, zumindest ein Justierungselement (21) angeordnet ist.

13. Elektrische Maschine aufweisend zumindest ein Bauteil nach einem der vorhergehenden Ansprüche.

14. Verfahren zur Montage eines Bauteils nach einem der Ansprüche 1-12 bzw. einer elektrischen Maschine nach Anspruch 13 umfassend die Verfahrensschritte:
- Bereitstellen der Welle (1) bzw. des Gehäuses (2) und des jeweiligen, mit der Welle (1) bzw. mit dem Gehäuse (2) verbundenen Steges (4),
- Anordnen der jeweiligen Spitze (5) des jeweiligen Steges (4) in der jeweiligen, offenen Nut (8) des Aktivteils (3),
- Anordnen des jeweiligen ersten Endes (9) des jeweiligen Verbindungselementes (6) in der jeweiligen Nut (8) des Aktivteils (3),
- Formschlüssiges Verbinden des jeweiligen Steges (4) und des jeweiligen Verbindungselementes (6) mit dem Aktivteil (3) durch Fixieren des jeweiligen Verbindungselementes (6) im Bereich seines jeweiligen zweiten Endes (10) am jeweiligen Steg (4) mittels des jeweiligen Befestigungselementes (7).

15. Serviceverfahren für ein Bauteil nach einem der Ansprüche 1-12 bzw. für eine elektrische Maschine nach Anspruch 13 umfassend die Verfahrensschritte:
- Lösen der formschlüssigen Verbindung des jeweiligen Steges (4) und des jeweiligen Verbindungselementes (6) mit dem Aktivteil (3) durch Lösen der Fixierung des jeweiligen Verbindungselementes (6) im Bereich seines jeweiligen zweiten Endes (10) am jeweiligen Steg (4) mittels des jeweiligen Befestigungselementes (7),
- Austauschen und/oder Reparieren zumindest eines Teils des Aktivteils (3),
- Durchführen des Verfahrens nach Anspruch 14 mit einem Aktivteil (3), welches das ausgetauschte Aktivteil ersetzt, und/oder dem reparierten Aktivteil (3).

## Claims

1. Component for an electric machine, wherein the component is designed as a rotor, comprising
- a shaft (1),
- an active part (3) which surrounds the shaft (1) in the circumferential direction and which is disposed concentrically to the shaft (1), and
- at least one leg (4) which is connected to the shaft (1) and the tip (5) of which points radially outward from the shaft (1),
wherein the component has at least one respective connecting element (6) and at least one respective fastening element (7), **characterised in that** the active part (3) has a radially inwardly open slot (8) for accommodating a respective first end (9) of the respective connecting element (6) and the respective tip (5) of the respective leg (4),
wherein the respective slot (8), the respective leg (4) and the respective connecting element (6) are designed such that by fixation of the respective connecting element (6) in the region of respective second end (10) thereof to the respective leg (4) by means of the respective fastening element (7), a form-fit connection of the respective leg (4) and of the respective connecting element (6) to the active part (3) can be obtained.

2. Component for an electric machine, wherein the component is designed as a stator, comprising
- a housing (2),
- a hollow cylindrical active part (3) which is disposed inside the housing (2), and
- at least one leg (4) which is connected to the housing (2) and the tip (5) of which points radially inward from the housing (2),
wherein the component has at least one respective connecting element (6) and at least one respective fastening element (7), **characterised in that** the active part (3) has a radially outwardly open slot (8) for accommodating a respective first end (9) of the respective connecting element (6) and the respective tip (5) of the respective leg (4),
wherein the respective slot (8), the respective leg (4) and the respective connecting element (6) are designed such that, by fixation of the respective connecting element (6) in the region of the respective second end (10) thereof to the respective leg (4) by means of the respective fastening element (7), a form-fit connection of the respective leg (4) and of the respective connecting element (6) to the active part (3) can be obtained.

3. Component according to one of the preceding claims,
wherein the fixation of the respective connecting element (6) to the respective leg (4) by means of the respective fastening element (7) is designed as a mechanically detachable connection.

4. Component according to claim 3,
wherein the respective fastening element (7) is designed as a rivet or bolt, in particular for a compression fitting.

5. Component according to one of the preceding claims,
wherein the respective slot (8) widens out at least in sections towards its respective slot bottom (11) in the circumferential direction.

6. Component according to claim 5,
wherein the slot (8) is dovetail-shaped at least in sections.

7. Component according to claim 5 or 6,
wherein the respective leg (4) widens out in the circumferential direction toward its tip (5) at least in the region of the lateral surface (12) which is assigned to a first lateral surface (13) of the respective slot (8).

8. Component according to one of claims 5-7,
wherein the respective connecting element (6) widens out in the circumferential direction toward its respective first end (9) at least in the region of the lateral surface (14) which is assigned to a second lateral surface (15) of the respective slot (8).

9. Component according to one of the preceding claims,
wherein the respective connecting element (6) has, between the two ends (9, 10) thereof, on its side facing the respective leg (8), a pivot point (16), in particular a projection, which, in the assembled state of the respective connecting element (6), bears on the respective leg (4),
wherein the respective connecting element (6) has a shorter first lever arm (17) and a longer second lever arm (18),
wherein the first lever arm (17) is the effective length between the pivot point (16) and at least one first contact point (19) at which the respective connecting element (6) bears on the active part (3) in the slot (8),
wherein the second lever arm (18) is the effective length between the pivot point (16) and at least one second contact point (20) at which the respective connecting element (6), in the region of the respective second end (10) thereof, is fixed to the respective leg (4) by means of the respective fastening element (7).

10. Component according to claim 9,
wherein the ratio of the length of the second lever arm (18) to the length of the first lever arm (17) is at least 5:1 or 10:1.

11. Component according to one of the preceding claims,
wherein the component is designed such that the respective leg (4) is centrable, in particular centrable in a play-free manner, in the radial direction and/or in the circumferential direction with respect to the active part (3).

12. Component according to claim 11,
wherein at least one adjusting element (21) is disposed between the respective leg (4) and the respective connecting element (6) in the region of the second contact point (20) at which the respective connecting element (6), in the region of the respective second end (10) thereof, is fixed to the respective leg (4) by means of the respective fastening element (7).

13. Electric machine having at least one component according to one of the preceding claims.

14. Method for assembling a component according to one of claims 1-12 or an electric machine according to claim 13, comprising the following steps:
- readying the shaft (1) or housing (2) and the respective leg (4) connected to the shaft (1) or housing (2),
- disposing the respective tip (5) of the respective leg (4) in the respective open slot (8) of the active part (3),
- disposing the respective first end (9) of the respective connecting element (6) in the respective slot (8) of the active part (3),
- connecting the respective leg (4) and the respective connecting element (6) to the active part (3) in a form-fit manner by fixation of the respective connecting element (6), in the region of the respective second end (10) thereof, to the respective leg (4) by means of the respective fastening element (7).

15. Servicing method for a component according to one of claims 1-12 or for an electric machine according to claim 13, comprising the following steps:
- releasing the form-fit connection of the respective leg (4) and of the respective connecting element (6) to the active part (3) by releasing the fixation of the respective connecting element (6), in the region of the respective second end (10) thereof, to the respective leg (4) by means of the respective fastening element (7),
- exchanging and/or repairing at least one part of the active part (3),
- carrying out the method according to claim 14 using an active part (3) which replaces the exchanged active part and/or using the repaired active part (3).

## Revendications

1. Partie constitutive d'une machine électrique, la partie constitutive étant conformée en rotor, comportant
- un arbre (1),
- une partie (3) active, qui entoure l'arbre (1) dans la direction périphérique et qui est disposée concentriquement à l'arbre (1) et
- au moins une réglette (4), qui est reliée respectivement à l'arbre (1) et dont la pointe (5) pointe vers l'extérieur radialement de l'arbre (1),
dans laquelle
la partie constitutive a au moins un élément (6) de liaison respectif et au moins un élément (7) de fixation respectif,
**caractérisé en ce que**
la partie (3) active a respectivement une rainure (8) ouverte vers l'intérieur radialement de réception d'une première extrémité (9) respective de l'élément (6) de liaison respectif et de la pointe (5) respective de la réglette (4) respective,
la rainure (8) respective, la réglette (4) respective et l'élément (6) de liaison respectif étant conformés de manière à pouvoir obtenir, par une immobilisation de l'élément (6) de liaison respectif, dans la région de sa deuxième extrémité (10) respective, à la réglette (4) respective, au moyen de l'élément (7) de fixation respectif, une liaison à complémentarité de forme de la réglette (4) respective et de l'élément (6) de liaison respectif à la partie (3) active.

2. Partie constitutive pour une machine électrique, dans laquelle la partie constitutive est conformée en stator, comportant
- une carcasse (2),
- une partie (3) active en forme de cylindre creux, qui est disposée à l'intérieur de la carcasse (2) et
- au moins une réglette (4), qui est reliée respectivement à la carcasse (2) et dont la pointe (5) pointe respectivement vers l'intérieur radialement de la carcasse (2),
dans laquelle
la partie constitutive a au moins un élément (6) de liaison respectif et au moins un élément (7) de fixation respectif,
**caractérisée en ce que**
la partie (3) active a respectivement une rainure (8) ouverte vers l'extérieur radialement de réception d'une première extrémité (9) respective, de l'élément (6) de liaison respectif et de la pointe (5) respective de la réglette (4) respective,
la rainure (8) respective, la réglette (4) respective et l'élément (6) de liaison respectif étant conformés de manière à pouvoir obtenir, par une immobilisation de l'élément (6) de liaison respectif, dans la région de sa deuxième extrémité (10) respective, à la réglette (4) respective, au moyen de l'élément (7) de fixation respectif, une liaison à complémentarité de forme de la réglette (4) respective et de l'élément (6) de liaison respectif à la partie (3) active.

3. Partie constitutive suivant l'une des revendications précédentes, dans laquelle l'immobilisation de l'élément (6) de liaison respectif à la réglette (4) respective au moyen de l'élément (7) de fixation respectif est conformée sous la forme d'une liaison pouvant être défaite mécaniquement.

4. Partie constitutive suivant la revendication 3,
dans laquelle l'élément (7) de fixation respectif est conformé en rivets ou en vis, notamment par un vissage de serrage.

5. Partie constitutive suivant l'une des revendications précédentes,
dans laquelle, au moins par tronçon, la rainure (8) respective s'élargit dans la direction périphérique vers son fond (11).

6. Partie constitutive suivant la revendication 5,
dans laquelle, au moins par tronçon, la rainure (8) est conformée en queue d'aronde.

7. Partie constitutive suivant la revendication 5 ou 6,
dans laquelle la réglette (4) respective s'élargit dans la direction périphérique vers sa pointe (5), au moins dans la région de la surface (12) latérale, qui est associée à une première surface (13) latérale de la rainure (8) respective.

8. Partie constitutive suivant l'une des revendications 5 à 7,
dans laquelle l'élément (6) de liaison respectif s'élargit dans la direction périphérique vers sa première extrémité (9) respective, au moins dans la région de la surface (14) latérale, qui est associée à une deuxième surface (15) latérale de la rainure (8) respective.

9. Partie constitutive suivant l'une des revendications précédentes,
dans laquelle l'élément (6) de liaison respectif a, entre ses deux extrémités (9, 10), du côté tourné vers la rainure (8), un point (16) de rotation, notamment une saillie, qui, lorsque l'élément (6) de liaison respectif est à l'état monté, s'applique à la réglette (4) respective,
dans laquelle l'élément (6) de liaison respectif a un premier bras (17) de levier plus court et un deuxième bras (18) de levier plus long,
dans laquelle le premier bras (17) de levier est la longueur efficace entre le point (16) de rotation et au moins un premier point (19) de contact, où l'élément (6) de liaison respectif s'applique dans la rainure (8) à la partie (3) active,
dans laquelle le deuxième bras (18) de levier est la longueur efficace entre le point (16) de rotation et au moins un deuxième point (20) de contact, où l'élément (6) de liaison respectif est, dans la région de sa deuxième extrémité (10) respective, immobilisé à la réglette (4) au moyen de l'élément (7) de fixation respectif.

10. Partie constitutive suivant la revendication 9,
dans laquelle le rapport de la longueur du deuxième bras (18) de levier à la longueur du premier bras (17) de levier est au moins de 5:1 ou de 10:1.

11. Partie constitutive suivant l'une des revendications précédentes,
dans laquelle la partie constitutive est conformée de manière à ce que la réglette (4) respective soit, par rapport à la partie (3) active, centrable, notamment centrable sans jeu, dans la direction radiale et/ou dans la direction périphérique.

12. Partie constitutive suivant la revendication 11,
dans laquelle, entre la réglette (4) respective et l'élément (6) de liaison respectif, dans la région du deuxième point (20) de contact où l'élément (6) de liaison respectif est immobilisé, dans la région de sa deuxième extrémité (10) respective, à la réglette (4) respective au moyen de l'élément (7) de fixation respectif, est disposé au moins un élément (21) de réglage.

13. Machine électrique ayant au moins une partie constitutive suivant l'une des revendications précédentes.

14. Procédé de montage d'une partie constitutive suivant l'une des revendications 1 à 12 ou d'une machine électrique suivant la revendication 13, comprenant les stades de procédé :
- on se procure l'arbre (1) ou la carcasse (2) et la réglette (4) respective reliée à l'arbre (1) ou à la carcasse (2),
- on met la pointe (5) respective de la réglette (4) respective dans la rainure (8) ouverte respective de la partie (3) active,
- on met la première extrémité (9) respective de l'élément (6) de liaison respectif dans la rainure (8) respective de la partie (3) active,
- on relie, à complémentarité de forme, la réglette (4) respective et l'élément (6) de liaison respectif à la partie (3) active, par immobilisation de l'élément (6) de liaison respectif, dans la région de sa deuxième extrémité (10) respective, à la réglette (4), au moyen de l'élément (7) de fixation respectif.

15. Procédé d'entretien d'une partie constitutive suivant l'une des revendications 1 à 12 ou d'une machine électrique suivant la revendication 13, comprenant les stades de procédé
- on défait la liaison à complémentarité de forme de la réglette (4) respective et de l'élément (6) de liaison respectif à la partie (3) active en défaisant l'immobilisation de l'élément (6) de liaison respectif dans la région de sa deuxième extrémité (10) respective à la réglette (4) respective au moyen de l'élément (7) de fixation respectif,
- on échange et/ou on répare au moins une pièce de la partie (3) active,
- on effectue le procédé suivant la revendication 14 avec une partie (3) active, qui remplace la partie active échangée et/ou la partie (3) active réparée.
